# NOUVEAU FASCICULE DE BREVET EUROPEEN

(11) **EP 2 125 966 B2**
(45) Date de publication et mention de la décision concernant l'opposition: **26.02.2020**
(45) Mention de la délivrance du brevet: 15.04.2015
(21) Numéro de dépôt: 07859028.8
(22) Date de dépôt: 04.12.2007
(51) Int. Cl.: C09C 1/02, C09C 1/42, C09D 1/00, D21H 17/69, D21H 19/40, D21H 19/64

(54) **PROCEDE DE FABRICATION D'UNE DISPERSION OU D'UNE SUSPENSION AQUEUSE CONTENANT DU CARBONATE DE CALCIUM ET DU KAOLIN ET SON UTILISATION DANS LA FABRICATION DE SAUCES DE COUCHAGE**
VERFAHREN ZUR HERSTELLUNG EINER WÄSSRIGEN DISPERSION ODER SUSPENSION, ENTHALTEND CALCIUMCARBONAT UND KAOLIN, UND VERWENDUNG DAVON BEI DER HERSTELLUNG VON STREICHMASSEN
METHOD FOR PRODUCING AN AQUEOUS DISPERSION OR SUSPENSION CONTAINING CALCIUM CARBONATE AND KAOLIN, AND USE THEREOF IN THE PREPARATION OF COATING SLIPS

(30) Priorité: 20.12.2006 FR 0611112
(43) Date de publication de la demande: 02.12.2009
(73) Titulaire: COATEX, 69730 Genay (FR)
(72) Inventeur: DUPONT, François, F-69004 Lyon (FR); MONGOIN, Jacques, F-69650 Quincieux (FR)
(74) Mandataire: Regimbeau
(86) Numéro de dépôt international: PCT/IB2007/003894
(87) Numéro de publication internationale: WO 2008/084313

(56) Documents cités:
- EP-A- 0 521 737
- EP-A- 1 340 795
- WO-A-02/49765

## Description

### Domaine Technique

Le domaine technique général relatif à la présente invention est celui du papier, et plus précisément des feuilles de papier couchées. De manière plus précise, ce domaine technique est celui des dispersions et des suspensions aqueuses de matière minérales, telles que notamment de carbonate de calcium d'origine naturelle (GCC) ou synthétique (PCC) et de kaolin, et de leurs procédés de fabrication, ces dispersions et suspensions aqueuses entrant ensuite dans la fabrication de sauces de couchage papetières qui permettent de coucher la feuille de papier, tout en améliorant ses propriétés optiques. On indique que dans la suite de la présente Demande, l'expression "produit final" désignera la feuille de papier couché à partir d'une sauce de couchage, ladite sauce étant une formulation contenant des matières minérales telles que du carbonate de calcium et du kaolin, lesdites matières minérales ayant été introduites dans cette sauce sous forme de dispersions aqueuses.

Dans le cadre de la fabrication de la feuille de papier par couchage, on dépose sur la surface du papier support une composition aqueuse dénommée "sauce de couchage" qui contient notamment de l'eau, une ou plusieurs matières minérales, un ou plusieurs liants ainsi que divers additifs. Les matières minérales les plus utilisées dans les sauces de couchage sont le carbonate de calcium d'origine naturelle (ou GCC selon l'expression anglaise "Ground Calcium Carbonate") ou synthétique (ou PCC selon l'expression anglaise "Precipitated Calcium Carbonate"), et le kaolin.

Le kaolin confère au produit final des propriétés de brillance, d'opacité et d'imprimabilité, tel qu'indiqué dans le document "Industrial clays case study" (Murray, H, Mining Minerals and Sustainable Development, Mai 2002, 64, pp 1-9), alors que le carbonate de calcium apporte avant tout de la blancheur à la feuille de papier, mais contribue aussi à l'amélioration de la brillance et de l'imprimabilité, comme rappelé dans le document "Influences of pigments on runnability and quality of LWC offset printing paper" (Wochenblatt für Papierfabrikation, 126 (4), 1998, pp 137-141).

Il existe de nombreux documents relatifs à la fabrication d'une sauce de couchage papetière, par mise en oeuvre d'au moins deux matières minérales dont l'une est un carbonate de calcium et l'autre un kaolin. On peut notamment citer le document US 5 120 365 qui décrit des mélanges de pigments à base de carbonate de calcium naturel et de talc, éventuellement avec du kaolin, de tels mélanges étant utilisés dans la formulation de sauces de couchage qui permettent d'obtenir de bonnes propriétés optiques au niveau du papier couché. On connaît aussi le document WO 03 / 93577, basé sur l'amélioration des propriétés optiques d'un papier couché, et qui décrit des compositions pigmentaires à base de kaolin et d'un carbonate de calcium naturel ou synthétique, ces matières minérales présentant des caractéristiques granulométriques particulières. On connaît également le document "Effect of kaolin addition to calcium carbonate precoats" (Wochenblatt für Papierfabrikation, 126 (4), 1998, pp 137-141) qui décrit les effets résultants du mélange de différents kaolins, avec 2 carbonates de calcium naturels qui diffèrent par leur facteur de forme. On peut enfin mentionner le document "Influences of pigments on runnability and quality of LWC offset printing paper" (Wochenblatt für Papierfabrikation, 126 (4), 1998, pp 137-141), déjà cité dans la présente Demande, et qui décrit le couchage de papier à base de sauces de couchage contenant des mélanges d'un carbonate de calcium naturel (Hydrocarb™ commercialisé par la société OMYA™) et de différents kaolins.

En soulignant que ces documents sont focalisés sur la fabrication de sauces de couchage, la Demanderesse précise que le domaine technique particulier relatif à la présente invention est celui des procédés de fabrication des dispersions et des suspensions aqueuses de matières minérales qui entrent par la suite dans la fabrication des sauces de couchage, et non le domaine des procédés de fabrication de ces sauces. Par conséquent, il est important de souligner que le problème technique objet de la présente Demande est celui de fabrication des suspensions aqueuses de matières minérales à base de carbonate de calcium et de kaolin, en vue d'améliorer les propriétés optiques du papier final. Par conséquent, si les documents précédents soulignent certains des avantages conférés par la mise en oeuvre de carbonate de calcium et de kaolin dans la fabrication d'une sauce de couchage, ils ne contiennent pas d'information particulière sur les procédés qui ont permis d'obtenir au préalable de tels kaolins et de tels carbonates de calcium. La description de cette connaissance, telle qu'elle existe aujourd'hui dans l'état de la technique, fait l'objet des lignes suivantes.

### Etat de la Technique

L'homme du métier sait que le carbonate de calcium et le kaolin sont aujourd'hui introduits dans les sauces de couchage, sous forme de deux dispersions ou suspensions aqueuses séparées, contenant chacune l'une de ces matières minérales. Le carbonate de calcium et le kaolin sont donc introduits dans la sauce de couchage, chacun sous forme d'une dispersion ou d'une suspension aqueuse contenant la matière minérale en question, et présentant pour des raisons économiques et techniques un extrait sec élevé : c'est-à-dire contenant au moins 60 %, préférentiellement 70 %, très préférentiellement 72 % en poids sec de carbonate de calcium ou de kaolin (dans toute la Demande, le terme "extrait sec" désignera la teneur en poids sec de matière minérale par rapport au poids total de la suspension ou de la dispersion aqueuse considérée). On met alors en oeuvre chacune de ces dispersions ou suspensions, de manière à obtenir au sein de la sauce de couchage une proportion en poids sec (carbonate de calcium : kaolin) comprise entre (90 : 10) et (10 : 90).

On va désormais décrire les modes de fabrication de ces dispersions et de ces suspensions aqueuses de kaolin d'une part, et de carbonate de calcium d'autre part, tout en expliquant :
- comment on parvient à fabriquer des telles dispersions ou suspensions avec un extrait sec au moins supérieur à 60 % de leur poids total d'une part,
- et comment on parvient à fabriquer de telles dispersions ou suspensions dans le but de conférer au papier final des propriétés optiques améliorées d'autre part.

### Etat de la Technique : cas du kaolin

En ce qui concerne le kaolin, il faut savoir qu'on trouve essentiellement celui-ci aux Amériques : au Brésil, ainsi qu'aux Etats-Unis et notamment en Géorgie et en Caroline du Sud, comme le souligne le document "Industrial clays case study" déjà mentionné auparavant. Le kaolin est obtenu classiquement par des procédés d'extraction du minerai, de broyage, de délamination puis éventuellement de traitement et de classification. Pour des raisons de coûts, les producteurs de kaolin américains et brésiliens ont opté depuis longtemps pour un transport de leurs produits sur de longues distances sous forme de poudre sèche.

Cette poudre sèche est obtenue à partir d'une étape de séchage, notamment par atomisation. Ce kaolin doit être alors remis en dispersion aqueuse, avant d'être introduit dans la sauce de couchage, cette étape de remise en dispersion aqueuse ayant fréquemment lieu en présence d'un agent de dispersion du kaolin. Cette étape est nécessaire pour fournir au formulateur de sauces de couchage un produit liquide, donc plus facilement manipulable et moins volatile qu'un produit pulvérulent ; avec de plus un extrait sec élevé lui permettant de formuler ses sauces de couchages à un extrait sec lui-même élevé.

Cette étape doit aussi désagglomérer le plus efficacement possible les agglomérats de kaolin qui ont été formés pendant l'étape de séchage. En effet, il est bien connu que le séchage d'une matière minérale, notamment par atomisation, conduit à la formation d'agglomérats de particules : c'est ce qu'indique le document "Spray dried products - characterization of particle morphology" (TransIChemE, vol. 77, part A, janvier 1999, pp. 21-38) dans le cas du séchage du kaolin. Or, selon les connaissances de base de l'homme du métier, la présence d'agglomérats constitue un facteur négatif pour l'obtention de bonnes propriétés optiques du produit final, telle que notamment sa brillance : la brillance est notamment conditionnée par la mise en oeuvre de particules les plus fines possibles.

Grâce aux méthodes précédemment décrites, on obtient donc des produits sous forme liquide qui sont des dispersions ou des suspensions aqueuses de kaolin dont la teneur en poids sec de minéral est supérieure à 60 % de leurs poids total, et dont la proportion d'agglomérats a été réduite grâce à l'étape de remise en dispersion dans l'eau de la poudre de kaolin.

### Etat de la Technique : cas du carbonate de calcium

En ce qui concerne le carbonate de calcium, il est important d'indiquer au préalable que certains carbonates de calcium permettent de conférer au papier final des propriétés optiques améliorées. De manière générale, il s'agit de carbonates de calcium qui présentent une distribution de tailles de particules (ou PSD) "verticale" ou "étroite". Concrètement, on représente le pourcentage en poids de particules dont le diamètre est inférieur à une certaine valeur, cette mesure pouvant être obtenue à partir d'un appareil du type Sedigraph™ : plus la courbe obtenue est verticale, plus la distribution de tailles de particules est dite verticale. Ceci signifie aussi que la distribution de l'ensemble des tailles des particules autour d'une valeur moyenne correspondant au diamètre moyen desdites particules est étroite : on parle donc aussi de distribution de tailles de particules étroite. Or, de nombreux documents soulignent qu'une distribution de tailles de particules étroite est une condition nécessaire à l'obtention de bonnes propriétés optiques au niveau du papier, telle que notamment son opacité. On peut ainsi citer les documents "Taking advantages of pigment performance through binder flexibility" (Paper Technology, 46 (8), 2005, pp 12-16) et "Maintaining coated paper performance while varying coating color solids with engineered carbonates" (Coating and Graphic Arts Conference and Exhibit, Baltimore USA, pp. 312-324, 2004).

De manière plus précise, ces dispersions aqueuses de carbonates de calcium particuliers présentant à la fois une PSD étroite et un extrait sec élevé (supérieur à 60 %) sont :
- soit à base de PCC obtenus par mise en dispersion ou précipitation in situ (éventuellement en présence d'un agent dispersant) avec un extrait sec inférieur à 40 % environ, puis par au moins une étape de concentration,
- soit à base de GCC obtenus par une étape de broyage (éventuellement en présence d'un agent dispersant ou d'aide au broyage) avec un extrait sec inférieur à 40 % environ, suivi d'au moins une étape de concentration.

L'art antérieur relatif à ces procédés va désormais être présenté.

### Etat de la Technique relatif au carbonate de calcium : cas de dispersions et de suspensions aqueuses de PCC présentant une PSD étroite et / ou un extrait sec supérieur à 60%

L'homme du métier connaît le document WO 98 / 25854 qui décrit un procédé de fabrication d'un PCC utilisé dans le couchage du papier, dont il améliore la brillance. Le problème technique résolu par ce document est de fournir un procédé de fabrication de PCC mettant en oeuvre une étape de concentration tout en limitant la quantité d'agent dispersant mise en oeuvre. Ce procédé comprend les étapes de formation d'une suspension de PCC avec un faible extrait sec (15 % selon les 4 exemples de ce document), traitement puis concentration de celle-ci par filtration en présence d'un tensioactif non-ionique, de manière à obtenir un gâteau de filtration présentant un extrait sec compris entre 55 % et 80 % en poids sec de PCC par rapport à son poids total.

Il connaît aussi le document EP 0 768 344 qui décrit un procédé de fabrication de PCC, destiné à être mis en oeuvre dans des sauces de couchage, tout en conférant au papier couché de bonnes propriétés optiques : brillance, blancheur et opacité. Le problème technique résolu par ce document est de fournir un procédé de fabrication de PCC sans formation d'agglomérats de cette matière minérale, agglomérats qui altèrent les propriétés optiques du papier. Ce procédé comprend les étapes de carbonatation de chaux en milieu aqueux de manière à obtenir une suspension aqueuse de PCC ayant un extrait sec peu élevé (18 % selon les exemples de ce document), de concentration puis de broyage. L'exemple 1 de ce document démontre clairement que si l'homme du métier souhaite obtenir un extrait sec supérieur à 70 % dans la suspension finale, il doit avoir recours à deux étapes de concentration.

Il connaît aussi le document US 4 242 318 qui décrit un procédé de fabrication de PCC destiné à être utilisé dans des sauces de couchage. Le problème technique résolu par ce document est de fournir un procédé de fabrication économique d'une suspension aqueuse de PCC, stable pendant au moins 30 jours et ayant un extrait sec supérieur à 65 % de son poids. Ce procédé comprend les étapes de cristallisation de PCC en milieu aqueux en présence d'un polyélectrolyte, concentration mécanique pour obtenir un gâteau de filtration, puis fluidification et homogénéisation du gâteau au moyen d'un agent dispersant. Il est indiqué qu'on obtient ainsi une suspension aqueuse présentant un extrait sec élevé (71,2 % selon l'exemple 2) sans ajout de matière sèche (colonne 3, ligne 41). Il est aussi précisé qu'on obtient un PCC avec une distribution de tailles de particules ou PSD très étroite, ce qui le rend particulièrement adapté pour être mis en oeuvre dans la fabrication du papier (colonne 4, ligne 66 - colonne 5, ligne 2).

Aussi, un des enseignements de l'état de la technique relatif aux procédés de fabrication de dispersions ou de suspensions aqueuses de PCC, utilisables dans le couchage du papier, est qu'il faut mettre en oeuvre une première étape de fabrication d'une dispersion ou d'une suspension aqueuse avec un extrait sec environ inférieur à 40 %, puis au moins une étape de concentration pour obtenir une dispersion ou une suspension ayant un extrait sec supérieur à 60 % de son poids. On obtient ainsi des dispersions ou des suspensions aqueuses de PCC présentant une PSD étroite qui, lorsqu'elles sont mises en oeuvre dans la formulation de sauces de couchage, conduisent à des papiers couchés ayant de bonnes propriétés optiques, notamment en terme d'opacité.

### Etat de la Technique relatif au carbonate de calcium : cas de dispersions et de suspensions aqueuses de GCC présentant une PSD étroite et / ou un extrait sec supérieur à 60%

Dans ce domaine, l'homme du métier connaît le document WO 01 / 48093 qui décrit l'utilisation comme agent dispersant de matières minérales, d'homopolymères et de copolymères de l'acide acrylique avec un autre monomère acrylique, allylique ou vinylique, et ayant un indice de viscosité compris entre 0,08 et 0,8. Ces agents dispersants sont mis en oeuvre après une première étape de broyage sans agent dispersant et qui conduit à un faible extrait sec (sans pour autant qu'il soit précisé) et une deuxième étape qui est une concentration mécanique ou thermique. D'une part, s'il n'existe pas de valeur permettant de quantifier le "faible extrait sec" obtenu après l'étape de broyage, l'analogie qui est faite avec le document EP 0 850 685 (page 2, ligne 13) permet de déduire qu'il est au plus égal à 40 %. D'autre part, le terme de "reconcentration", largement utilisé dans ce document WO 01 / 48093, souligne bien le fait qu'au moins 2 étapes de concentration doivent être mises en oeuvre dans cette invention. L'exemple 7 démontre qu'on parvient alors à obtenir une suspension aqueuse de GCC dont l'extrait sec est égal à 72 % de son poids. Les matières minérales ainsi obtenues entrent notamment dans la formulation de sauces de couchage, comme le démontre l'exemple 9, permettant ainsi d'améliorer l'opacité du papier couché avec lesdites sauces.

Il connaît aussi le document EP 0 850 685. Le problème technique résolu par ce document est de réaliser la mise en suspension de particules minérales (et notamment de GCC) issues d'une étape de broyage à faible concentration sans agent dispersant et d'une étape de reconcentration mécanique et / ou thermique. Le procédé objet de cette invention comprend les étapes de fabrication d'une suspension aqueuse de GCC ayant un extrait sec inférieur à 40 % de son poids total, concentration de la suspension de manière à obtenir un extrait sec au moins égal à 60 %, puis ajout d'un agent dispersant qui est un copolymère acide acrylique / acide maléique (dans un ratio molaire de 0,5/1 à 10/1 et de poids moléculaire compris entre 1 000 g/mole et 100 000 g/mole). Ce document met donc en oeuvre au moins une étape de concentration, en vue d'obtenir un extrait sec final supérieur à 60 %. De plus, les exemples de ce document qui ne décrivent qu'une seule étape de concentration, ne permettent pas d'obtenir un extrait sec supérieur à 70 % du poids total des suspensions fabriquées. On peut donc légitimement penser qu'une étape de reconcentration est nécessaire à l'obtention d'un extrait sec supérieur à 70 % en poids. Enfin, ce document indique clairement que les suspensions aqueuses de GCC ainsi fabriquées présentent une PSD étroite (col. 3, lignes 19-28), et qu'elles peuvent être utilisées de manière avantageuse dans le couchage papetier.

Aussi, un des enseignements de l'état de la technique relatif aux procédés de fabrication de dispersions ou de suspensions aqueuses de GCC, utilisables dans le couchage du papier, est qu'il faut mettre en oeuvre une première étape de fabrication d'une dispersion ou d'une suspension aqueuse, notamment par broyage, avec un extrait sec environ inférieur à 40 % de son poids, puis au moins une étape de concentration pour obtenir une dispersion ou une suspension ayant un extrait sec supérieur à 60 % de son poids. On obtient ainsi des dispersions ou des suspensions aqueuses de GCC présentant une PSD étroite qui, lorsqu'elles sont mises en oeuvre dans la formulation de sauces de couchage, conduisent à des papiers couchés ayant de bonnes propriétés optiques, notamment en terme d'opacité.

On connait enfin le document EP 1 340 795 A1 qui propose la fabrication de suspensions aqueuses de PCC avec ajout de kaolin en poudre ; ce document présente le GCC comme une charge ayant un impact négatif sur les propriétés optiques du papier, ce qui pousse l'homme du métier à préférer le PCC audit GCC. Enfin, on connait le document WO 02/49765 qui est une bonne illustration des dispersants acryliques utilisés pour disperser du GCC dans l'eau.

### Objet de l'invention

Poursuivant ses recherches en vue de fabriquer des dispersions ou des suspensions aqueuses de carbonate de calcium et de kaolin qui améliorent les propriétés optiques du produit final telle que notamment son opacité, la Demanderesse a mis au point un nouveau procédé caractérisé en ce qu'il comprend les étapes de :
a) fabriquer, en présence d'au moins un agent dispersant et / ou d'au moins un agent d'aide au broyage, une dispersion et / ou une suspension aqueuse de carbonate de calcium naturel et / ou précipité ayant un extrait sec compris entre 45 % et 70 %, préférentiellement entre 55 % et 70 %, très préférentiellement entre 60 % et 70 % de son poids total,
b) ajouter dans la dispersion et / ou la suspension obtenue après l'étape a) du kaolin sous forme de poudre, de manière à obtenir une dispersion et / ou une suspension aqueuse présentant un ratio en poids sec (carbonate de calcium : kaolin) compris entre (90 : 10) et (10 : 90), préférentiellement entre (90 : 10) et (50 : 50), très préférentiellement entre (80 : 20) et (60 : 40).

Un premier avantage du procédé selon la présente invention, est qu'il fournit à l'homme du métier, sous forme d'un produit unique et dans les ratio désirés, les deux matières minérales qu'il souhaite introduire dans la sauce de couchage, contrairement à l'art antérieur qui mettait en oeuvre une dispersion aqueuse de carbonate de calcium et une dispersion aqueuse de kaolin de manière séparée.

D'autre part, comme le montrent les exemples supportant la présente Demande, le procédé selon l'invention conduit à des dispersions et / ou des suspensions aqueuses dont l'extrait sec peut être relativement élevé, notamment supérieur à 65 %, préférentiellement 70 %, très préférentiellement 72 % de leur poids total : c'est-à-dire au moins égaux ou supérieurs aux extrait secs des dispersions de kaolin ou de carbonate de calcium de l'art antérieur avec les mêmes avantages économiques et techniques. Comme le démontrent aussi ces exemples, les viscosités de telles dispersions et / ou suspensions permettent tout à fait de transporter et de manipuler aisément de tels produits.

Un autre avantage du procédé objet de la présente invention, est qu'il s'avère plus économique que les procédés de l'art antérieur, puisqu'il permet de s'affranchir des étapes de concentration mises en oeuvre dans l'art antérieur et ce, tout en maintenant les propriétés optiques du papier. Il est important de souligner que ces étapes de concentration sont en effet relativement coûteuses, compte tenu de l'énergie qu'elles mettent en oeuvre, mais aussi de part la nécessité de disposer d'appareils dont l'installation et l'entretien sont très onéreux (tels que des centrifugeuses, ou des évaporateurs thermiques ou mécaniques).

De plus, il est tout à fait surprenant que le procédé selon l'invention conduise à des dispersions et / ou des suspensions aqueuses de matières minérales contenant du carbonate de calcium et du kaolin qui, utilisées pour fabriquer des sauces de couchage, permettent d'obtenir de bonnes propriétés optiques au niveau du papier couché à partir desdites sauces. En effet, comme le montre l'analyse de l'art antérieur, il est a priori préférable de fabriquer au départ une dispersion ou une suspension aqueuse de GCC et de PCC ayant un faible extrait sec (inférieur à 40 %), en vue d'obtenir une PSD étroite ce qui permettra d'améliorer les propriétés optiques du papier telle que son opacité : la présente invention va à l'encontre de cet enseignement, puisqu'elle met en oeuvre une première étape de fabrication avec un extrait sec compris entre 45 % et 70 %, préférentiellement entre 55 % et 70 %, très préférentiellement entre 60 % et 70 %.

Sans vouloir être liée à une quelconque théorie, la Demanderesse pense que les étapes de concentration mises en œuvre dans l'art antérieur, et nécessaires à la fourniture de produits concentrés, ont en fait un impact négatif au niveau des propriétés optiques du produit final. Même si on a mis en œuvre au préalable une première étape de broyage ou de dispersion à faible concentration (ce qui est un facteur conduisant à l'obtention de PSD étroite et donc -a priori- à de bonnes propriétés optiques pour le papier), ces étapes ultérieures de concentration tendent à minimiser ce bénéfice.

Il existe un autre élément de surprise, quant à la possibilité d'obtenir avec le procédé selon l'invention des dispersions et / ou des suspensions aqueuses contenant du carbonate de calcium et du kaolin et permettant d'obtenir une bonne brillance au niveau du produit final : c'est l'introduction de kaolin sous forme de poudre sèche. En effet, ces poudres de kaolin sont obtenues à partir d'une étape de séchage de suspensions aqueuses de kaolin, notamment de séchage par atomisation : or, on a déjà indiqué que ce type de séchage conduit à la formation d'agglomérats de particules, et que la présence de tels agglomérats est un facteur qui nuit aux propriétés optiques du papier telle que notamment sa brillance. Il est donc tout à fait surprenant qu'on obtienne un maintien et même une amélioration de la brillance du produit final avec le procédé selon l'invention, par rapport aux procédés de l'art antérieur.

Sans vouloir être liée à une quelconque théorie, la Demanderesse pense que dans le cadre de l'invention, lorsque le kaolin sec (qui présente des agglomérats) est introduit dans la dispersion aqueuse de carbonate de calcium, les particules dudit carbonate se comportent comme des agents désagglomérants des particules "grossières" de kaolin. On parvient ainsi à réduire la quantité d'agglomérats de kaolin, ce qui expliquerait pourquoi la brillance finale du papier couché n'est pas dégradée dans le cadre de l'invention, et est même améliorée par rapport à l'art antérieur.

### Objet détaillé de l'invention

Aussi, un premier objet de l'invention est un procédé de fabrication d'une dispersion et / ou d'une suspension aqueuse de carbonate de calcium et de kaolin, caractérisé en ce qu'il comprend les étapes de :
a) fabriquer, en présence d'au moins un agent dispersant et / ou d'au moins un agent d'aide au broyage, une dispersion et / ou une suspension aqueuse de carbonate de calcium naturel et / ou précipité, ayant un extrait sec compris entre 45 % et 70 %, préférentiellement entre 55 % et 70 %, très préférentiellement entre 60 % et 70 % de son poids total,
b) ajouter dans la dispersion et / ou la suspension obtenue après l'étape a) du kaolin sous forme de poudre, de manière à obtenir une dispersion et / ou une suspension aqueuse présentant un ratio en poids sec (carbonate de calcium : kaolin) compris entre (90 : 10) et (10 : 90), préférentiellement entre (90 : 10) et (50 : 50), très préférentiellement entre (80 : 20) et (60 : 40).

Dans une première variante où le carbonate de calcium est un carbonate de calcium naturel (GCC), ce procédé est caractérisé en ce qu'il comprend les étapes de :
a) fabriquer par broyage dans l'eau, en présence d'au moins un agent dispersant et / ou d'au moins un agent d'aide au broyage, une dispersion et / ou une suspension aqueuse de carbonate de calcium naturel, ayant un extrait sec compris entre 45 % et 70 %, préférentiellement entre 55 % et 70 %, très préférentiellement entre 60 % et 70 % de son poids total,
b) ajouter dans la dispersion et / ou la suspension obtenue après l'étape a) du kaolin sous forme de poudre, de manière à obtenir une dispersion et / ou une suspension aqueuse présentant un ratio en poids sec (carbonate de calcium naturel : kaolin) compris entre (90: 10) et (10: 90), préférentiellement entre (90: 10) et (50: 50), très préférentiellement entre (80 : 20) et (60 : 40).

Selon cette variante, le procédé selon l'invention est caractérisé en ce que le carbonate de calcium naturel (GCC) est choisi parmi un calcaire, une craie, une calcite, un marbre et leurs mélanges.

Cette variante apparaît d'autant plus inventive que le carbonate de calcium naturel ne conduit pas à de bonnes propriétés optiques, contrairement au PCC, comme le divulgue le document EP 1 340 795 ([0007]) : l'homme du métier songe donc, avant tout, à mettre en oeuvre du PCC. S'il souhaite utiliser un GCC, il aura recours de manière évidente aux procédés de concentration décrits dans l'art antérieur (brevets WO 01 / 48093 et EP 0 850 685 précités). Mettre en oeuvre selon l'invention un GCC et ce, sans avoir recours à une étape de concentration, est donc synonyme d'activité inventive.

De plus, le document EP 1 340 795 ne divulgue de manière certaine et non ambiguë uniquement que 2 exemples : ceux-ci portent sur la fabrication d'une suspension de PCC et de kaolin. Ceci ne saurait antérioriser l'invention ici revendiquée : un procédé relatif au GCC, dont on fabrique une suspension aqueuse avec les extraits secs donnés plus haut, suspension dans laquelle on introduit du kaolin sec dans les proportions données aussi plus haut.

De même, le document EP 0 521 737 ne divulgue que le cas particulier du PCC : ceci n'antériorise pas le cas du GCC au sens de la nouveauté, et renforce l'activité inventive de la présente invention qui repose sur du GCC et non du PCC tel que souligné dans ce document EP 0 521 737.

Dans une deuxième variante où le carbonate de calcium est un carbonate de calcium précipité (PCC), ce procédé est caractérisé en ce qu'il comprend les étapes de :
a) fabriquer par dispersion dans l'eau et / ou précipitation in-situ dans l'eau, éventuellement en présence d'au moins un agent dispersant, une dispersion et / ou une suspension aqueuse de carbonate de calcium précipité, ayant un extrait sec compris entre 45 % et 70 %, préférentiellement entre 55 % et 70 %, très préférentiellement entre 60 % et 70 % de son poids total,
b) ajouter dans la dispersion et / ou la suspension obtenue après l'étape a) du kaolin sous forme de poudre, de manière à obtenir une dispersion et / ou une suspension aqueuse présentant un ratio en poids sec (carbonate de calcium précipité : kaolin) compris entre (90: 10) et (10: 90), préférentiellement entre (90: 10) et (50: 50), très préférentiellement entre (80 : 20) et (60 : 40).

Selon cette variante, le procédé selon l'invention est caractérisé en ce que le carbonate de calcium précipité est choisi parmi une calcite, une aragonite, une vatérite et leurs mélanges.

De manière générale, le procédé selon l'invention est aussi caractérisé en ce qu'il met en oeuvre au cours de l'étape a), une quantité en poids sec d'agent dispersant et ou d'aide au broyage comprise entre 0,1 % et 3 %, préférentiellement entre 0,3 % et 1 %, très préférentiellement entre 0,4 % et 0,8 %, par rapport au poids sec de carbonate de calcium. De manière générale, le procédé selon l'invention est aussi caractérisé en ce que l'agent dispersant et l'agent d'aide au broyage sont un homopolymère ou un copolymère de l'acide (méth)acrylique, totalement ou partiellement neutralisé par au moins un agent de neutralisation.

L'homme du métier saura adapter le choix des agents de neutralisation, le poids moléculaire, l'indice de polymolécularité dudit agent, en fonction des caractéristiques de la dispersion ou de la suspension aqueuse qu'il cherche à obtenir (tels que l'extrait sec, la viscosité, la granulométrie des particules de carbonate de calcium, ...).

Toutefois, dans une variante très préférée de l'invention, le procédé selon l'invention est caractérisé en ce que l'agent dispersant et l'agent d'aide au broyage sont avantageusement un homopolymère ou un copolymère de l'acide (méth)acrylique, totalement neutralisés, dont le taux de neutralisation molaire des sites carboxyliques par un agent monovalent est compris entre 20 % et 80 %, préférentiellement entre 40 % et 60 %, et dont le taux de neutralisation molaire des sites carboxyliques par un agent divalent est compris entre 20 % et 80 %, préférentiellement entre 40 % et 60 %.

Selon cette variante, le procédé selon l'invention est caractérisé en ce que l'agent monovalent est l'hydroxyde sodium et l'agent divalent est l'oxyde de magnésium.

On décrit également des dispersions et / ou des suspensions aqueuses, caractérisées en ce qu'elles sont obtenues par le procédé selon l'invention.

On décrit également l'utilisation de ces dispersions et / ou de ces suspensions aqueuses, dans la fabrication de sauces de couchage papetières.

### EXEMPLES

### Exemple 1

Cet exemple illustre le procédé de fabrication selon l'invention d'une dispersion aqueuse de carbonate de calcium naturel et de kaolin.

Il illustre également la dispersion selon l'invention ainsi obtenue.

Il illustre aussi l'utilisation selon l'invention de cette dispersion dans la formulation d'une sauce de couchage.

Il illustre enfin la mise en oeuvre de cette sauce de couchage pour coucher un papier, et démontre que les propriétés optiques dudit papier (brillance, opacité et blancheur) sont au moins conservées, par rapport au même papier couché à partir d'une sauce obtenue selon l'art antérieur (c'est-à-dire par introduction dans la sauce de deux dispersions : l'une contenant du carbonate de calcium et résultant d'un broyage suivi d'une concentration, l'autre contenant du kaolin et résultant de la mise en dispersion dans l'eau dudit kaolin).

### Fabrication de la dispersion aqueuse de carbonate de calcium naturel selon l'étape a) du procédé de l'invention

Pour chacun des essais n° 1 à 3, on commence par broyer un carbonate de calcium naturel dans l'eau, en présence d'un agent d'aide au broyage, de manière à obtenir une suspension aqueuse dont la teneur en poids sec dudit carbonate est égale à 65 % de son poids total.

### Essai n° 1

Cet essai met en oeuvre 0,7 % en poids sec, par rapport au poids sec de carbonate de calcium, d'un homopolymère de l'acide acrylique obtenu par polymérisation classique, de poids moléculaire égal à 5 600 g/mole, dont 50 % en mole des sites carboxyliques ont été neutralisés par le magnésium et 50 % en mole des sites carboxyliques ont été neutralisés par le sodium.

### Essai n° 2

Cet essai met en oeuvre 0,7 % en poids sec, par rapport au poids sec de carbonate de calcium, d'un homopolymère de l'acide acrylique de poids moléculaire égal à 13 000 g/mole, totalement neutralisé par le sodium. Cet homopolymère a été obtenu par la technique de polymérisation radicalaire contrôlée RAFT, selon la technique mise en oeuvre et décrite dans le document FR 2 821 620.

### Essai n° 3

Cet essai met en oeuvre 0,7 % en poids sec, par rapport au poids sec de carbonate de calcium, d'un homopolymère de l'acide acrylique obtenu par polymérisation classique, de poids moléculaire égal à 10 000 g/mole, totalement neutralisé par le sodium.

Pour chacune des dispersions obtenues, on détermine le pourcentage en poids des particules dont le diamètre moyen est inférieur à 1 µm et 2 µm, à partir d'un appareil Sedigraph™ 5100 commercialisé par la société MICROMERITICS™. On détermine également les viscosités Brookfield™, à 25 °C, à 10 et à 100 tours par minutes et à l'aide du mobile adéquat, aux instants t=0, t=8 jours avant agitation, et t=8 jours et après 30 secondes d'agitation, respectivement notées µₜ₀, µₜ₈ AVAG et µₜ₈ APAG. L'ensemble de ces résultats est reporté dans le tableau 1.

**Tableau 1**

| **Essai n°** | **ES (%)** | **Granulométrie** | | **Viscosités Brookfield™** | | | | | |
|---|---|---|---|---|---|---|---|---|---|
| | | % < 1 µm | % < 1 µm | µₜ₀ 10t/min | µₜ₀ 100t/min | µ_{t8 AVAG} 10t/min | µ_{t8 AVAG} 100t/min | µ_{t8 APAG} 10t/min | µ_{t8 APAG} 100t/min |
| 1 | 65 | 92,9 | 74 | 250 | 130 | 3100 | 1000 | 280 | 160 |
| 2 | 65 | 98,1 | 78 | 110 | 85 | 2040 | 650 | 130 | 120 |
| 3 | 65 | 97,5 | 75,4 | 130 | 110 | 2180 | 740 | 100 | 90 |

Les viscosités Brookfield™ obtenues démontrent que les dispersions aqueuses de carbonate de calcium obtenues selon l'étape a) du procédé selon l'invention, sont stables et fluides.

### Fabrication de la dispersion de carbonate de calcium naturel et de kaolin par introduction du kaolin en poudre selon l'étape b) du procédé selon l'invention.

Pour chacun des essais n° 4 à 6, on ajoute dans les dispersions aqueuses de carbonate de calcium obtenues pour les essais n° 1 à 3, un kaolin en poudre commercialisé par la société HUBER™ sous le nom d'Hydragloss™ 90.

Cet ajout est réalisé de telle manière à obtenir un ratio en poids sec (carbonate de calcium : kaolin) égal à (70 : 30), ainsi qu'un extrait sec de la dispersion égal à 72 % de son poids.

De la même manière que précédemment, on détermine pour ces dispersions aqueuses les viscosités Brookfield™, à 25 °C, à 10 et à 100 tours par minutes, aux instants t=0, t=8 jours avant agitation, et t=8 jours et après 30 secondes d'agitation, respectivement notées µₜ₀, µ_{t8 AVAG} et µ_{t8 APAG}.

**Tableau 2**

| **Essai n°** | **ES (%)** | **Viscosités Brookfield™** | | | | | |
|---|---|---|---|---|---|---|---|
| | | µₜ₀ 10 t/min | µₜ₀ 100 t/min | µ_{t8 AVAG} 10 t/min | µ_{t8 AVAG} 100 t/min | µ_{t8 APAG} 10 t/min | µ_{t8 APAG} 100 t/min |
| 4 | 72 | 1560 | 600 | 440 | 240 | 180 | 120 |
| 5 | 72 | 860 | 340 | 490 | 325 | 110 | 100 |
| 6 | 72 | 600 | 210 | 200 | 110 | 180 | 160 |

Les viscosités Brookfield™ obtenues démontrent que les dispersions aqueuses de carbonate de calcium et de kaolin obtenues après l'étape b) du procédé selon l'invention, sont stables et fluides.

### Fabrication de sauces de couchage selon l'invention et selon l'art antérieur.

### Essai n° 7

Pour cet essai qui illustre l'art antérieur, on réalise une sauce de couchage dans laquelle les matières minérales (carbonate de calcium naturel et kaolin) sont apportées sous forme de deux dispersions aqueuses selon l'art antérieur :
- sous forme d'une dispersion aqueuse de carbonate de calcium dont l'extrait sec est égal à 72 % de son poids total, obtenue par une étape de broyage à faible concentration sans agent dispersant suivie d'une étape de concentration thermique ;
- sous forme d'une dispersion aqueuse de kaolin dont l'extrait sec est égal à 72 % de son poids total, obtenue par mise en dispersion dans l'eau d'un kaolin commercialisé par la société HUBER™ sous le nom d'Hydragloss™ 90, en présence de 0,04 % en poids sec par rapport au poids sec de kaolin d'un polyacrylate de sodium.

Pour les essais n° 8 à 10 qui illustrent l'invention, on réalise une sauce de couchage dans laquelle les matières minérales sont apportées sous forme d'une seule dispersion aqueuse : il s'agit des dispersions aqueuses selon l'invention contenant du carbonate de calcium naturel et du kaolin qui ont été obtenues pour les essais n° 4 à 6. La composition des différentes sauces de couchage est indiquée dans le tableau 3.

**Tableau 3**

| | **ES (%)** | **Essai n°** | | | |
|---|---|---|---|---|---|
| | | **7** | **8** | **9** | **10** |
| **Dispersion aqueuse de CaCO₃ selon l'essai n° 7** | 72 | 70 | | | |
| **Dispersion aqueuse de kaolin selon l'essai n° 7** | 72 | 30 | | | |
| **Dispersion aqueuse de CaCO₃ et de kaolin selon l'essai n° 4** | 72 | | 100 | | |
| **Dispersion aqueuse de CaCO₃ et de kaolin selon l'essai n° 5** | 72 | | | 100 | |
| **Dispersion aqueuse de CaCO₃ et de kaolin selon l'essai n° 6** | 72 | | | | 100 |
| **Latex DL 966** | 50 | 11 | 11 | 11 | 11 |
| **Mowiol™ 4/98** | 25 | 0,5 | 0,5 | 0,5 | 0,5 |
| **Finnfix™** | 10 | 0,6 | 0,6 | 0,6 | 0,6 |
| **Blancophor™** | - | 0,5 | 0,5 | 0,5 | 0,5 |

Les chiffres dans les colonnes correspondant aux essais n° 7 à 10 indiquent la part en poids en l'état des différents constituants.

D'autre part :
- DL 966 désigne un latex styrène-butadiène commercialisé par la société DOW™ CHEMICALS,
- Mowiol™ 4/98 désigne un alcool polyvinylique commercialisé par la société CLARIANT™,
- Finnfix™ désigne une carboxyméthylcellulose commercialisée par la société BASF™,
- Blancophor™ désigne un azurant optique commercialisé par la société BAYER™.

Le tableau 4 indique les valeurs des viscosités Brookfield™, à 25°C et à l'instant t=0, mesurées à 10 et à 100 tours par minute sur l'ensemble de ces sauces de couchage.

**Tableau 4**

| | **Essai n°** | | | |
|---|---|---|---|---|
| | **7** | **8** | **9** | **10** |
| **Viscosité Brookfield ™ (t0) 10 t/min** | 7560 | 7840 | 8620 | 8700 |
| **Viscosité Brookfield ™ (t0) 100 t/min** | 1310 | 1350 | 1500 | 1470 |

Les viscosités Brookfield™, mesurées à l'instant t=0, à 10 et 100 tours / minute, sont très proches pour l'art antérieur et pour l'invention.

### Couchage de papiers selon l'invention et selon l'art antérieur.

Chacune des sauces de couchage correspondant aux essais n° 7 (art antérieur) et n° 8 à 10 (invention) a servi à coucher un papier sans bois ayant un grammage de 58 g/m², donnant lieu respectivement aux essais n° 11 (art antérieur) et 12 à 14 (invention). Le couchage a été réalisé au moyen d'une coucheuse pilote à lame raclante, ayant permis de déposer sur le papier support un poids de sauce de couchage égal à 12 ± 1 g/m². Le papier couché obtenu a ensuite été calandré par 3 passages en pression à 80°C et à 40 bars.

Sur les papiers couchés et calandrés correspondant aux essais n° 11 (art antérieur) et n° 12 à 14 (invention), on a alors déterminé :
- la blancheur W(CIE) selon la norme ISO / FDIS 11475,
- l'opacité selon la norme NFQ-03040,
- la brillance TAPPI 75° selon la norme TAPPI T480 OS-78.

L'ensemble de ces résultats est indiqué dans le tableau 5.

**Tableau 5**

| | **Essai n°** | | | |
|---|---|---|---|---|
| | **11** | **12** | **13** | **14** |
| **Blancheur** | 114 | 115 | 115 | 114 |
| **Opacité** | 87 | 87 | 88 | 87 |
| **Brillance** | 57 | 59 | 59 | 57 |

Ces résultats démontrent que les propriétés optiques de papiers couchés à partir des sauces formulées selon la présente invention sont, de manière surprenante, au moins égales aux mêmes propriétés obtenues sur le papier couché à partir de la sauce formulée selon l'art antérieur.

### Exemple 2

Cet exemple illustre le procédé de fabrication selon l'invention d'une dispersion aqueuse de carbonate de calcium naturel et de kaolin. Il illustre également la dispersion selon l'invention ainsi obtenue. Il illustre aussi l'utilisation selon l'invention de cette dispersion dans la formulation d'une sauce de couchage. Il illustre enfin l'intérêt de mettre en oeuvre l'agent dispersant préféré selon l'invention, disposant de taux de neutralisation spécifiques pour l'agent neutralisant monovalent et l'agent neutralisant divalent.

### Fabrication de la dispersion aqueuse de carbonate de calcium naturel selon l'étape a) du procédé de l'invention

Pour chacun des essais n° 15 à 18, on commence par broyer un carbonate de calcium naturel dans l'eau, en présence d'un agent d'aide au broyage, de manière à obtenir une suspension aqueuse dont la teneur en poids sec dudit carbonate est égale à 65 % de son poids total.

### Essai n° 15

Cet essai met en oeuvre 0,6 % en poids sec, par rapport au poids sec de carbonate de calcium, d'un homopolymère de l'acide acrylique obtenu par polymérisation classique, de poids moléculaire égal à 5 600 g/mole, dont 50 % en mole des sites carboxyliques ont été neutralisés par le magnésium et 50 % en mole des sites carboxyliques ont été neutralisés par le sodium. Cet essai illustre la variante préférentielle de l'invention.

### Essai n° 16

Cet essai met en oeuvre 0,6 % en poids sec, par rapport au poids sec de carbonate de calcium, d'un homopolymère de l'acide acrylique obtenu par polymérisation classique, de poids moléculaire égal à 5 600 g/mole, dont 90 % en mole des sites carboxyliques ont été neutralisés par le magnésium et 10 % en mole des sites carboxyliques ont été neutralisés par le sodium.

### Essai n° 17

Cet essai met en oeuvre 0,6 % en poids sec, par rapport au poids sec de carbonate de calcium, d'un homopolymère de l'acide acrylique obtenu par polymérisation classique, de poids moléculaire égal à 5 600 g/mole, dont 10 % en mole des sites carboxyliques ont été neutralisés par le calcium et 90 % en mole des sites carboxyliques ont été neutralisés par le sodium.

### Essai n° 18

Cet essai met en oeuvre 0,6 % en poids sec, par rapport au poids sec de carbonate de calcium, d'un homopolymère de l'acide acrylique obtenu par polymérisation classique, de poids moléculaire égal à 5 600 g/mole, dont 100 % en mole des sites carboxyliques ont été neutralisés par le sodium.

### Fabrication de la dispersion de carbonate de calcium naturel et de kaolin par introduction du kaolin en poudre selon l'étape b) du procédé selon l'invention.

Pour chacun des essais n° 19 à 22, on ajoute dans les dispersions aqueuses de carbonate de calcium obtenues pour les essais n° 15 à 18, deux kaolins en poudre commercialisés par la société HUBER™ sous le nom d'Hydragloss™ 90 et Hydraprint™.

Cet ajout est réalisé de telle manière à obtenir :
- un ratio en poids sec (carbonate de calcium : kaolin) égal à (60 : 40),
- un extrait sec de la dispersion égal à 72 % de son poids,
- la même quantité des 2 kaolins dans la suspension finale.

### Fabrication de sauces de couchage selon l'invention et selon l'art antérieur.

### Essai n° 23

Pour cet essai qui illustre l'art antérieur, on réalise une sauce de couchage dans laquelle les matières minérales (carbonate de calcium naturel et les 2 kaolins) sont apportées sous forme de deux dispersions aqueuses selon l'art antérieur :
- sous forme d'une dispersion aqueuse de carbonate de calcium dont l'extrait sec est égal à 72 % de son poids total, obtenue par une étape de broyage à faible concentration sans agent dispersant suivie d'une étape de concentration thermique ;
- sous forme d'une dispersion aqueuse de kaolin dont l'extrait sec est égal à 72 % de son poids total, obtenue par mise en dispersion dans l'eau d'un mélange de kaolins commercialisés par la société HUBER™ sous les noms d'Hydragloss™ 90 et d'Hydraprint™, en présence de 0,04 % en poids sec par rapport au poids sec de kaolin d'un polyacrylate de sodium.

Pour les essais n° 24 à 27 qui illustrent l'invention, on réalise une sauce de couchage dans laquelle les matières minérales sont apportées sous forme d'une seule dispersion aqueuse : il s'agit des dispersions aqueuses selon l'invention contenant du carbonate de calcium naturel et du kaolin qui ont été obtenues pour les essais n° 19 à 22. La composition des différentes sauces de couchage est indiquée dans le tableau 6.

**Tableau 6**

| | **ES (%)** | **Essai n°** | | | | |
|---|---|---|---|---|---|---|
| | | **23** | **24** | **25** | **26** | **27** |
| **Dispersion aqueuse de CaCO₃ selon l'essai n° 23** | 72 | 60 | | | | |
| **Dispersion aqueuse de kaolin selon l'essai n° 23** | 72 | 40 | | | | |
| **Dispersion aqueuse de CaCO₃ et de kaolin selon l'essai n° 24** | 72 | | 100 | | | |
| **Dispersion aqueuse de CaCO₃ et de kaolin selon l'essai n° 25** | 72 | | | 100 | | |
| **Dispersion aqueuse de CaCO₃ et de kaolin selon l'essai n° 26** | 72 | | | | 100 | |
| **Dispersion aqueuse de CaCO₃ et de kaolin selon l'essai n° 27** | 72 | | | | | 100 |
| **Latex DL 966** | 50 | 11 | 11 | 11 | 11 | 11 |
| **Mowiol™ 4/98** | 25 | 0,4 | 0,4 | 0,4 | 0,4 | 0,4 |
| **Finnfix™** | 10 | 0,5 | 0,5 | 0,5 | 0,5 | 0,5 |
| **Blancophor™** | 0,6 | 0,6 | 0,6 | 0,6 | 0,6 | 0,6 |

Les chiffres dans les colonnes correspondant aux essais n° 23 à 27 indiquent la part en poids en l'état des différents constituants.

### Couchage de papiers selon l'invention et selon l'art antérieur.

Chacune des sauces de couchage correspondant aux essais n° 23 (art antérieur) et n° 24 à 27 (invention) a servi à coucher un papier avec bois ayant un grammage de 36 g/m², donnant lieu respectivement aux essais n° 28 (art antérieur) et 29 à 32 (invention). Le couchage a été réalisé au moyen d'une coucheuse pilote à lame raclante, ayant permis de déposer sur le papier support un poids de sauce de couchage égal à 12 ± 1 g/m². Le papier couché obtenu a ensuite été calandré par 2 passages en pression à 80°C et à 40 bars.

Sur les papiers couchés obtenus, on a alors déterminé :
- la blancheur W(CIE) selon la norme ISO / FDIS 11475,
- l'opacité selon la norme NFQ-03040,
- la brillance TAPPI 75° selon la norme TAPPI T480 OS-78.

L'ensemble de ces résultats est indiqué dans le tableau 7.

**Tableau 7**

| | **Essai n°** | | | | |
|---|---|---|---|---|---|
| | **28** | **29** | **30** | **31** | **32** |
| **Blancheur** | 80,0 | 81,5 | 81,0 | 80,9 | 80,8 |
| **Opacité** | 89,0 | 89,9 | 89,6 | 89,5 | 89,5 |
| **Brillance** | 55,0 | 58,0 | 57,2 | 57,3 | 57,1 |

Ces résultats démontrent que les propriétés optiques de papiers couchés à partir des sauces formulées selon la présente invention sont, de manière surprenante, supérieures aux mêmes propriétés obtenues sur le papier couché à partir de la sauce formulée selon l'art antérieur.

Ces résultats démontrent enfin l'intérêt de mettre en oeuvre la variante préférentielle de l'invention qui correspond à l'essai n° 29.

## Revendications

1. Procédé de fabrication d'une dispersion et / ou d'une suspension aqueuse de carbonate de calcium naturel choisi parmi un calcaire, une craie, une calcite, un marbre et leurs mélanges, et de kaolin, **caractérisé en ce qu'**il comprend les étapes de :
a) fabriquer, en présence d'au moins un agent dispersant et / ou d'au moins un agent d'aide au broyage, une dispersion et / ou une suspension aqueuse de carbonate de calcium naturel, ayant un extrait sec compris entre 45 % et 70 %, préférentiellement entre 55 % et 70 %, très préférentiellement entre 60 % et 70 % de son poids total,
b) ajouter dans la dispersion et / ou la suspension obtenue après l'étape a) du kaolin sous forme de poudre, de manière à obtenir une dispersion et / ou une suspension aqueuse présentant un ratio en poids sec (carbonate de calcium : kaolin) compris entre (90 : 10) et (10 : 90), préférentiellement entre (90 : 10) et 15 (50 : 50), très préférentiellement entre (80 : 20) et (60 : 40).

2. Procédé selon la revendication 1, **caractérisé en ce qu'**il met en oeuvre au cours de l'étape a), une quantité en poids sec d'agent dispersant et ou d'aide au broyage comprise entre 0,1 % et 3 %, préférentiellement entre 0,3 % et 1 %, très préférentiellement entre 0,4 % et 0,8 %, par rapport au poids sec de carbonate de calcium.

3. Procédé selon l'une des revendications 1 à 2, **caractérisé en ce que** l'agent dispersant et l'agent d'aide au broyage sont un homopolymère ou un copolymère de l'acide (méth)acrylique, totalement ou partiellement neutralisé par au moins un agent de neutralisation.

4. Procédé selon la revendication 3, **caractérisé en ce que** l'agent dispersant et l'agent d'aide au broyage sont un homopolymère ou un copolymère de l'acide (méth)acrylique, totalement neutralisés, dont le taux de neutralisation molaire des sites carboxyliques par un agent monovalent est compris entre 20% et 80%, préférentiellement entre 40% et 60%, et dont le taux de neutralisation molaire des sites carboxyliques par un agent divalent est compris entre 20% et 80%, préférentiellement entre 40% et 60%.

5. Procédé selon la revendication 4, **caractérisé en ce que** l'agent monovalent est l'hydroxyde de sodium et l'agent divalent est l'oxyde de magnésium.

## Patentansprüche

1. Verfahren zur Herstellung einer Dispersion und / oder einer wässrigen Suspension von natürlichem Calciumcarbonat, ausgewählt aus einem Kalk, einer Kreide, einem Calcit, einem Marmor und deren Mischungen, sowie von Kaolin, **dadurch gekennzeichnet, dass** es die folgenden Schritte umfasst:
a) Herstellen, in Gegenwart mindestens eines Dispergiermittels und/oder mindestens eines Zerkleinerungshilfsmittels, einer Dispersion und / oder einer wässrigen Suspension von natürlichem Calciumcarbonat, die einen Trockenmassegehalt im Bereich von 45 % bis 70 %, vorzugsweise von 55 % bis 70 %, stark bevorzugt 60 % bis 70 %, ihres Gesamtgewichts aufweist,
b) Zusatz von pulverförmigem Kaolin zu der Dispersion und / oder der Suspension, die in Schritt a) erhalten, wurde, sodass eine Dispersion und / oder eine wässrige Suspension erhalten wird, die ein Trockengewichtsverhältnis (Calciumcarbonat : Kaolin) im Bereich von (90 : 10) bis (10 : 90), vorzugsweise von (90 : 10) bis (50 : 50), stark bevorzugt von (80 : 20) bis (60 : 40) aufweist.

2. Verfahren nach Anspruch 1, **dadurch gekennzeichnet, dass** im Laufe des Schrittes a) eine gewichtsmäßige Menge an Dispergier- und / oder Zerkleinerungshilfsmittel eingesetzt wird, die im Bereich von 0,1 % bis 3 %, vorzugsweise von 0,3 % bis 1 %, stark bevorzugt von 0,4 % bis 0,8 % liegt, bezogen auf das Trockengewicht an Calciumcarbonat.

3. Verfahren nach einem der Ansprüche 1 bis 2, **dadurch gekennzeichnet, dass** es sich bei dem Dispersionsmittel und dem Zerkleinerungshilfsmittel um ein Homopolymer oder ein Copolymer der (Meth)acrylsäure handelt, welches vollständig oder teilweise mit einem Neutralisierungsmittel neutralisiert wurde.

4. Verfahren nach Anspruch 3, **dadurch gekennzeichnet, dass** es sich bei dem Dispersionsmittel und dem Zerkleinerungshilfsmittel um ein Homopolymer oder ein Copolymer der (Meth)acrylsäure handelt, wobei diese vollständig neutralisiert sind und der molare Grad der Neutralisierung ihrer Carboxylgruppen mit einem einwertigen Mittel im Bereich von 20 % bis 80 %, vorzugsweise von 40 % bis 60 %, liegt und der molare Grad der Neutralisierung ihrer Carboxylgruppen mit einem zweiwertigen Mittel im 5 Bereich von 20 % bis 80 %, vorzugsweise von 40 % bis 60 %, liegt.

5. Verfahren nach Anspruch 4, **dadurch gekennzeichnet, dass** es sich bei dem einwertigen Mittel um Natriumhydroxid und bei dem zweiwertigen Mittel um Magnesiumoxid handelt.

## Claims

1. Method for manufacturing an aqueous dispersion and/or suspension of natural calcium carbonate selected from among a limestone, a chalk, a calcite, a marble and mixtures thereof, and of kaolin, **characterized in that** comprises the steps of:
a) manufacturing, in the presence of at least one dispersing agent and/or at least one grinding aid agent, an aqueous dispersion and/or suspension of natural calcium carbonate, with a solids content comprised between 45% and 70%, preferentially between 55% and 70%, very preferentially between 60% and 70% of its total weight,
b) adding powdered kaolin to the dispersion and/or suspension obtained after step a), so as to obtain a dispersion and/or an aqueous suspension having a dry weight ratio (calcium carbonate:kaolin) comprised between (90:10) and (10:90), preferentially between (90:10) and (50:50), very preferentially between (80:20) and (60:40).

2. A Method according to claim 1, **characterized in that** it uses, during step a), a dry weight quantity of dispersing agent and/or grinding aid agent comprised between 0.1% and 3%, preferentially between 0.3% and 1%, very preferentially between 0.4% and 0.8%, compared with the dry weight of the calcium carbonate.

3. A Method according to one of the claims 1 to 2, **characterized in that** the dispersing agent and grinding aid agent are a homopolymer or a copolymer of (meth)acrylic acid, fully or partially neutralized by at least one neutralization agent.

4. A method according to claim 3, **characterized in that** the dispersing agent and the grinding aid agent are a homopolymer or a copolymer of (meth)acrylic acid, fully neutralized, with a molar neutralization rate of carboxylic sites by a monovalent agent between 20% and 80%, preferentially between 40% and 60%, and with a molar neutralization rate of carboxylic sites by a divalent agent between 20% and 80%, preferentially between 40% and 60%.

5. Method according to claim 4, **characterized in that** the monovalent agent is sodium hydroxide and the divalent agent is magnesium oxide.
